# EUROPÄISCHE PATENTSCHRIFT

(11) **EP 1 232 334 B1**
(45) Veröffentlichungstag und Bekanntmachung des Hinweises auf die Patenterteilung: **18.02.2004**
(21) Anmeldenummer: 00987158.3
(22) Anmeldetag: 16.11.2000
(51) Int. Cl.: F01N 3/20, B01D 53/94

(54) **VORRICHTUNG UND VERFAHREN ZUM ENTSTICKEN VON ABGAS EINER BRENNKRAFTMASCHINE**
DEVICE AND METHOD FOR THE NITROGEN OXIDE CONTROL OF WASTE GAS IN AN INTERNAL COMBUSTION ENGINE
DISPOSITIF ET PROCEDE DE DENITROGENISATION DES GAZ D'ECHAPPEMENT D'UN MOTEUR A COMBUSTION INTERNE

(30) Priorität: 24.11.1999 DE 19956493
(43) Veröffentlichungstag der Anmeldung: 21.08.2002
(73) Patentinhaber: SIEMENS AKTIENGESELLSCHAFT, 80333 München (DE)
(72) Erfinder: TOST, Rainer, 90427 Nürnberg (DE)
(74) Vertreter: Tergau & Pohl Patentanwälte
(86) Internationale Anmeldenummer: PCT/DE2000/004066
(87) Internationale Veröffentlichungsnummer: WO 2001/038703

(56) Entgegenhaltungen:
- EP-A- 0 928 884
- EP-B- 0 577 853
- WO-A-99/49958
- DE-A- 4 214 183
- ANONYMOUS: "Selective Catalytic Reduction" DIESEL CATALYSTS, [Online] August 2000 (2000-08), Seiten 1-11, XP002163384 Gefunden im Internet: <URL:www.dieselnet.com> [gefunden am 2001-01-18]

## Beschreibung

Die Erfindung betrifft eine Vorrichtung und ein Verfahren zum Entsticken von Abgas einer Brennkraftmaschine gemäß dem Oberbegriffen des Patentanspruches 1 bzw.6.

Die Reduzierung der Stickoxidemission einer mit Luftüberschuß arbeitenden Brennkraftmaschine, insbesondere einer DieselBrennkraftmaschine kann mit Hilfe der Selektiv-Catalytic-Reduction-Technologie (SCR) zu Luftstickstoff (N₂) und Wasserdampf (H₂O) erfolgen. Als Reduktionsmittel werden entweder gasförmiges Ammoniak (NH₃), Ammoniak in wässeriger Lösung oder Harnstoff in wässeriger Lösung eingesetzt. Der Harnstoff dient dabei als Ammoniakträger und wird mit Hilfe eines Dosiersystems vor einem Hydrolysekatalysator in das Auspuffsystem eingespritzt, dort mittels Hydrolyse zu Ammoniak umgewandelt, der dann wiederum in dem eigentlichen SCR- oder DeNOX-Katalysator die Stickoxide reduziert.

Ein solches Dosiersystem weist als wesentliche Komponenten einen Reduktionsmittelbehälter, eine Pumpe, einen Drucksensor und ein Dosierventil auf. Die Pumpe fördert das in dem Reduktionsmittelbehälter bevorratete Reduktionsmittel zu dem Dosierventil, mittels dessen das Reduktionsmittel in den Abgasstrom stromaufwärts des Hydrolysekatalysators eingespritzt wird. Das Dosierventil wird über Signale einer Steuereinrichtung derart angesteuert, daß abhängig von Betriebsparametern der Brennkraftmaschine eine bestimmte, aktuell nötige Menge an Reduktionsmittel zugeführt wird (DE 197 43 337 C1).

Es ist ein Vorteil der in wässerigen Lösungen vorliegenden ammoniakfreisetzenden Substanzen, wie z.B. Harnstoff, daß die Bevorratung, die Handhabung, die Förder-und Dosierbarkeit technisch relativ einfach zu lösen sind. Ein Nachteil dieser wässerigen Lösungen besteht darin, daß bei einer Erwärmung über eine bestimmte Temperaturgrenze, die wiederum u.a. von der Konzentration der gelösten Substanz abhängt, eine thermischen Zersetzung der Lösung im Reduktionsmitteltank einsetzt.

Bei hohen Temperaturen, zum Beispiel bei Abstellen des mit einer solchen Abgasnachbehandlungsanlage ausgerüsteten Fahrzeuges an Orten mit hoher Sonneneinstrahlung oder auch während des Betriebes des Fahrzeuges in heißen Regionen kann es zur Überhitzung des zumindest teilweise in Ammoniak umwandelbaren Reduktionsmittels kommen. Der mit steigender Temperatur zunehmende Zersetzungsdampfdruck für zum Beispiel eine wässerige Harnstofflösung führt zur Bildung von Ammoniak und dadurch zu einer Druckerhöhung im Vorratsbehälter.

Um einerseits eine Zerstörung des Vorratsbehälters durch unzulässig hohen Überdruck zu vermeiden und anderseits einen Ammoniakschlupf, insbesondere beim Öffnen des Einfüllstutzen des Vorratsbehälters zu verhindern, ist es aus der EP 0 577 853 B1 bekannt, bei einer Abgasnachbehandlungsanlage für eine Brennkraftmaschine der eingangs beschriebenen Art an den Vorratsbehälter für das Reduktionsmittel eine Druckentlastungsleitung anzuschließen, die überschüssiges Reduktionsmittel dem DeNOx-Katalysator zuführt. Die Druckentlastungsleitung ist dabei an den Eingang des DeNOx-Katalysators, d.h an der der Brennkraftmaschine zugewandten Seite angeschlossen. In die Druckentlastungsleitung ist ein Überdruckventil eingeschaltet, wodurch sich die von dem DeNOx-Katalysator aufzunehmende Menge überschüssiges Ammoniak im Rahmen der Druckfestigkeit des Vorratsbehälters begrenzen läßt.

Bei dem bekannten Verfahren zur Druckentlastung kann zwar ein unzulässig hoher Druckaufbau im Vorratsbehälter vermieden werden, die über die Druckentlastungsleitung dem Katalysator zugeführte Menge an Reduktionsmittel kann aber bei der Dosierstrategie nur unzureichend berücksichtigt werden.

Der Erfindung liegt somit die Aufgabe zugrunde, eine Vorrichtung und ein Verfahren anzugeben, mit der bzw. mit dem ein unzulässig hoher Überdruck in einem Reduktionsmittelvorratsbehälter einer Abgasnachbehandlungseinrichtung der eingangs genannten Art zuverlässig verhindert werden kann, ohne daß es dabei zu einer Beeinträchtigung der Dosiergenauigkeit kommt.

Diese Aufgabe wird für die Vorrichtung durch die Merkmale des Patentanspruches 1 und für das Verfahren durch die Merkmale des Patentanspruches 6 gelöst.

Durch Berücksichtigen der in Stillstandzeiten der Brennkraftmaschine aufgrund von Temperatureinflüssen auftretenden Menge an ausgasenden Reduktionsmittel bei der Bestimmung der im Betrieb der Brennkraftmaschine zu dosierenden Menge an Reduktionsmittellösung wird neben einer Erhöhung der Betriebssicherheit auch im Bereich kritischer Umgebungsbedingungen, z.B. im Sommerbetrieb auch eine hohe Dosiergenauigkeit erreicht.

Die gezielte Ausnutzung des durch die Erwärmung freiwerdenden gasförmigen Reduktionsmittels, im Falle der Verwendung einer wässerigen Harnstofflösung als Reduktionsmittel also Ammoniak, verhindert einen Schlupf von Reduktionsmittel, da bei Erreichen eines vorgegebenen Druckwertes im Reduktionsmittelvorratsbehälter das gasförmige Reduktionsmittel über eine Druckentlastungsleitung in den Reduktionskatalysator geleitet wird. Die Menge des einströmenden gasförmigen Reduktionsmittels wird in vorteilhafter Weise mittels eines Durchflußzählers in der Druckentlastungsleitung erfasst und bei der Berechnung der Reduktionsmittelmenge berücksicht. So wird bei Betrieb der Brennkraftmaschine erst wieder flüssiges Reduktionsmittel gezielt in den Abgaskanal der Brennkraftmaschine eingespritzt, wenn das gasförmige Reduktionsmittel im Reduktionskatalysator verbraucht ist.

Bei abgestelltem Fahrzeug können die Werte für Druck und Öffnungsdauer einer in der Druckentlastungsleitung angeordneten Ventileinrichtung durch eine intelligente Sensorik gespeichert werden und nach einem Start der Brennkraftmaschine werden diese Werte von einem die Dosierung des Reduktionsmittels steuernden Steuergerät abgefragt, übertragen und der gespeicherte aktuelle Reduktionskatalysatorfüllstand kann entsprechend korrigiert werden.

Vorteilhafte Weiterbildungen sind in den Unteransprüchen angegeben.

Die Erfindung wird nachfolgend unter Bezugnahme auf die Zeichnungen näher erläutert. Es zeigen:
- Figur 1: ein Ausführungsbeispiel einer aktiven Tankdruckregelung und kontrollierter Druckentlastung in den Abgaskatalysator,
- Figur 2: ein Ausführungsbeispiel einer passiven Tankdruckregelung und kontrollierter Druckentlastung in den Abgaskatalysator.

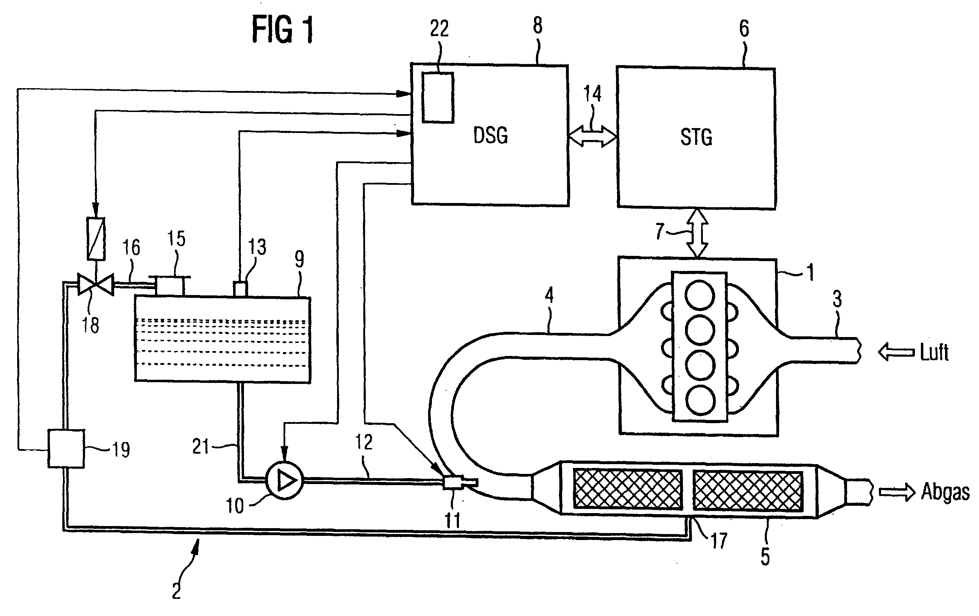

Allen beiden Figuren ist gemeinsam, daß nur die für das Verständnis der Erfindung notwendigen Komponenten der Brennkraftmaschine und der ihr zugeordneten Einrichtung zum Entsticken von Abgas dargestellt sind. Insbesondere ist auf die Darstellung des Kraftstoffkreislaufes verzichtet worden. In den Ausführungsbeispielen ist als Brennkraftmaschine eine Dieselbrennkraftmaschine gezeigt und als Reduktionsmittel zum Nachbehandeln des Abgases wird wässerige Harnstofflösung verwendet. Gleiche Komponenten sind figurenübergreifend mit den gleichen Bezugszeichen versehen und werden anhand der Beschreibung der Figur 1 nur einmal erklärt.

In Figur 1 ist in Form eines Blockschaltbildes sehr vereinfacht eine Dieselbrennkraftmaschine 1 gezeigt, die mit einer Einrichtung 2 zum Entsticken von Abgas ausgerüstet ist und der über einen nur teilweise dargestellten Ansaugkanal 3 die zur Verbrennung notwendige Luft zugeführt wird. Ausgangsseitig ist die Brennkraftmaschine 1 mit einem Abgaskanal 4 verbunden, in desssen weiteren Verlauf ein SCR - Speicherreduktionskatalysator 5, im nachfolgenden vereinfacht als Reduktionskatalysator, bezeichnet, angeordnet ist.

Zur Steuerung und Regelung der Brennkraftmaschine 1 ist ein an sich bekanntes Motorsteuergerät (STG) 6 über eine hier nur schematisch dargestellte Daten-/und Steuerleitung 7 mit der Brennkraftmaschine 1 verbunden. Über diese Daten-/ und Steuerleitung 7 werden Signale von Sensoren (z.B. Temperatursensoren für Ansaugluft, Ladeluft, Kühlmittel, Lastsensor, Geschwindigkeitssensor) und Signale für Aktoren (z.B. Einspritzventile, Stellglieder) zwischen der Brennkraftmaschine 1 und dem Motorsteuergerät 6 übertragen.

Die Vorrichtung 2 zur Entstickung von Abgas weist neben dem Reduktionskatalysator 5, der beispielsweise mehrere in Reihe geschaltete, nicht näher bezeichnete Katalysatoreinheiten beinhaltet, noch ein Dosiersteuergerät (DSG) 8, einen Reduktionsmittelvorratsbehälter 9 mit einer elektrisch ansteuerbaren Reduktionsmittelpumpe 10 zum Fördern des Reduktionsmittels und eine Dosiereinrichtung, in Form eines Dosierventils 11 auf. Die Reduktionsmittelpumpe 10 ist mittels einer Saugleitung 21 mit dem Reduktionsmittelvorratsbehälter 9 und mittels einer Zuführungsleitung 12 mit dem Dosierventil 11 verbunden. Stromabwärts und/oder stromaufwärts des Reduktionskatalysators 5 kann zusätzlich je ein Oxidationskatalysator angeordnet sein (nicht dargestellt).

Als Reduktionsmittel dient in diesem Ausführungsbeispiel wässerige Harnstofflösung, die in dem Reduktionsmittelvorratsbehälter 9 gespeichert ist. An der Oberseite des Reduktionsmittelvorratsbehälters 9 ist ein Drucksensor 13 vorgesehen, der ein den Druck im Reduktionsmittelvorratsbehälter 9 entsprechendes Signal an das Dosiersteuergerät 8 abgibt. Dem Reduktionsmittelvorratsbehälter 9 sind noch weitere Sensoren zugeordnet, welche die Temperatur der wässerigen Harnstofflösung und den Füllstand im Reduktionsmittelvorratsbehälter 10 erfassen (nicht dargestellt).

An das Dosiersteuergerät 8 werden außerdem noch die Signale eines stromaufwärts des Reduktionskatalysators 5 angeordneten Temperatursensors und eines stromabwärts des Reduktionskatalysators angeordneten Abgasmeßaufnehmers, z.B. eines NOx-Sensors übergeben (nicht dargestellt).

Das Dosiersteuergerät 8 steuert bedarfsweise das elektromagnetische Dosierventil 11 an, dem über die Zuführungsleitung 12 Harnstofflösung mit Hilfe der Reduktionsmittelpumpe 10 aus dem Reduktionsmittelvorratsbehälter 9 zugeführt wird. Die Einspritzung der Harnstofflösung mittels des Dosierventiles 11 erfolgt in den Abgaskanal 4 stromaufwärts des Reduktionskatalysators 5.

Das Dosiersteuergerät 8 ist zum gegenseitigen Datenaustausch elektrisch mit dem Motorsteuergerät 6, beispielsweise über einen CAN-Bus 13 verbunden. Über diesen Bus werden die zur Berechnung der zu dosierenden Menge an Harnstofflösung relevanten Betriebsparameter, wie z.B. Maschinendrehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät 8 übergeben.

Es ist auch möglich, die Funktionen des Dosiersteuergerätes 8 für das Reduktionsmitteldosiersystem in das Motorsteuergerät 6 der Brennkraftmaschine zu integrieren.

Ausgehend von diesen Parametern und den Meßwerten für die Abgastemperatur und dem NOₓ-Gehalt im Abgas berechnet das Dosiersteuergerät 8 die einzuspritzende Menge an Harnstofflösung und gibt über eine nicht näher bezeichnete elektrische Verbindungsleitung ein entsprechendes elektrisches Signal an das Dosierventil 11 ab. Durch die Einspritzung in den Abgaskanal 4 wird der Harnstoff hydrolysiert und durchmischt. In den Katalysatoreinheiten des Reduktionskatalysators erfolgt die katalytische Reduktion des NOₓ im Abgas zu N₂ und H₂O.

Im oberen Teil des Reduktionsmittelvorratsbehälters 9, insbesondere an einem Einfüllstutzen 15 des Reduktionsmittelvorratsbehälters 9 zweigt eine Druckentlastungsleitung 16 ab. Durch den Abzweig am Einfüllstutzen 15 in Verbindung mit einem nicht dargestellten Schwimmerventil wird sichergestellt, daß auch bei vollständig gefülltem Reduktionsmittelbehälter 9 kein flüssiges Reduktionsmittel in die Druckentlastungsleitung 16 gelangen kann. Die Druckentlastungsleitung 16 endet an einer Stelle 17 innerhalb des Reduktionskatalysators 5. Durch eine solche Wahl des Einspeiseortes wird zuverlässig verhindert, daß bei Stillstand der Brennkraftmaschine 1 aufgrund einer durch die Restwärme der Abgasanlage entstehenden Kaminwirkung Ammoniak in Richtung der Brennkraftmaschine strömen kann. Dadurch werden möglichen Korrossionschäden an Teilen der Brennkraftmaschine 1, insbesondere an Lagern, Gehäuseteilen, Ventilsitzen und Kolbenöden aufgrund der chemischen Agressivität von Ammoniak vorgebeugt.

Im Verlauf der Entlastungsleitung 16 ist ein über elektrische Steuersignale des Dosiersteuergeräts 6 steuerbares Ventil 18 und eine Durchflußmeßeinrichtung 19, z.B. ein Durchflußzähler für Ammoniak (NH₃) angeordnet, der bei geöffnetem Ventil 18 ein den Durchsatz des ausgasenden Reduktionsmittel entsprechendes Signal an das Dosiersteuergerät 6 abgibt.

Im nachfolgenden wird die Funktion dieser Vorrichtung, wie sie in Figur 1 schematisch dargestelt ist, erläutert.

Der Druck im Reduktionsmittelvorratsbehälter 9 wird mit Hilfe des Drucksensors 13 ständig überwacht. Durch Temperaturerhöhung gast Ammoniak aus und dies führt zu einer Druckerhöhung im Reduktionsmittelvorratsbehälter 9. Übersteigt der Druck im Reduktionsmittelvorratsbehälter einen Grenzwert, der applikativ u.a. abhängig von der Geometrie und Konstruktion des Reduktionsmittelvorratsbehälters, sowie vom Umgebungsdruck festgelegt und in einem Speicher 22 des Dosiersteuergeräts 8 abgelegt ist, so wird das elektrische Ventil 18 über Signale des Dosiersteuergerätes 8 geöffnet. Ammoniak strömt über die Durchlußmeßeinrichtung 19 in den Reduktionskatalysator 5. Ist der Druck im Reduktionsmittelbehälter 9 vollständig abgebaut, wozu wieder das Signal des Drucksensors 13 ausgewertet wird, wird das Ventil 18 geschlossen.

Da die Ammoniakspeicherfähigkeit des SCR-Katalysators durch sein Volumen und seine Temperatur begrenzt ist und der Wirkungsgrad des ReduktionskKatalysators auch durch die gespeicherte Ammoniakmenge bestimmt ist, wird die Menge des aufgrund des Ausgasens in den Reduktionskatalysator 5 strömenden Ammoniaks mittels der Durchflußmeßeinrichtung 19 erfasst und der Wert in dem Speicher 22 des Dosiersteuergerätes 6 abgelegt. Während des Betriebes der Brennkraftmaschine 1 wird vom Dosiersteuergerät 6 zyklisch der Wirkungsgrad des Reduktionskatalysators und ein Sollwert für die zu dosierende Reduktionsmittelmenge ermittelt. Die Reduktionsmittelmenge wird aus Betriebsparametern der Brennkraftmaschine wie beispielsweise Luftmasse, Betriebstemperatur, Katalysatortemperatur, Last berechnet. Die so berechnete Reduktionsmittelmenge wird anschließend aufgrund der während des Ausgasens bereits dem Reduktionskatalysator zugeführten zusätzliche Ammoniakmenge korrigiert. Hierzu wird das Signal des Durchflußmeßgerätes ausgewertet. Dies kann beispielsweise dadurch erfolgen, daß in einem Kennfeld oder einer Tabelle ein Zusammenhang zwischen der Menge an ausgegasten Ammoniak und der dazugehörigen Reduktionsmittelmenge (wässerige Harnstofflösung) abgelegt ist. Die betriebspunktabhängig berechnete Dosiermenge an wässeriger Harnstoffmenge wird dann um diesen Wert reduziert. Damit kann sowohl ein unzulässig hoher Druck im Reduktionsmittelvorratsbehälter, als auch ein Ammoniakschlupf sicher vermieden werden.

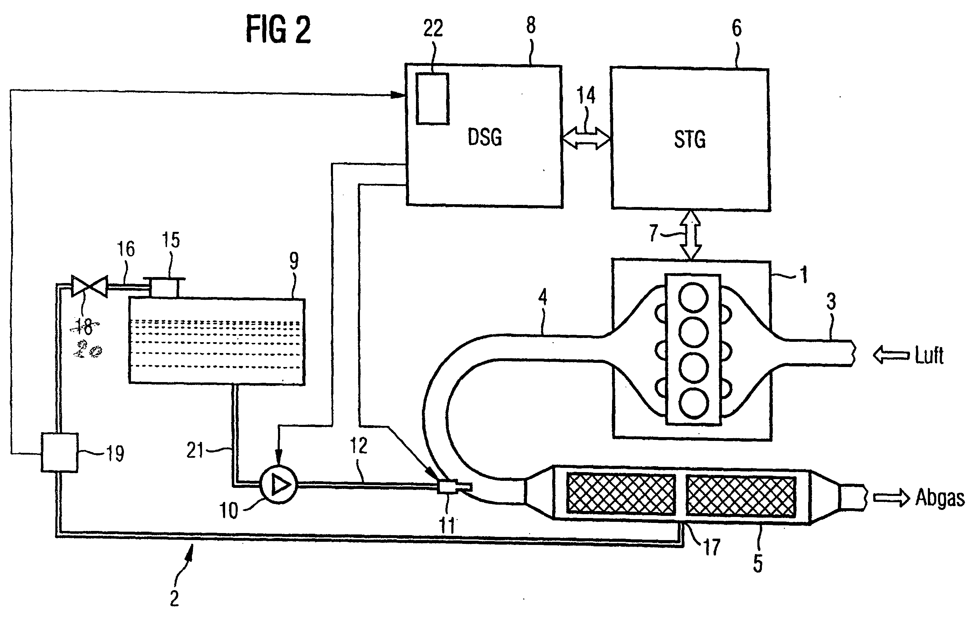

Die Figur 2 zeigt eine gegenüber den oben beschriebenen Ausführungsbeispielen keine aktive, sondern eine passive Tankdruckregelung und damit eine einfachere und kostengünstigere Möglichkeit, den Druck im Reduktionsmittelbehälter zu reduzieren ohne dabei die Dosiergenauigkeit zu beeinflussen.

Die Vorrichtung entspricht grundsätzlich dem Aufbau, wie er anhand der Figur 1 erläutert wurde. Unterschiedlich ist, daß kein Drucksensor benötigt wird und in der Entlastungsleitung 16 kein elektrisch ansteuerbares Ventil, sondern ein mechanisch wirkendes Überdruckventil 20 angeordnet ist. Dieses Überdruckventil 20 öffnet automatisch bei Erreichen eines vorgegebenen Druckes im Reduktionsmittelbehälter 9. Die Menge des ausgasenden Ammoniaks wird auch in diesem Fall mit der Durchflußmeßeinrichtung 19 erfasst und wie oben beschrieben, bei der Dosierstrategie berücksichtigt.

Anstelle der Durchflußmeßeinrichtung 19, das die Ammoniakmenge erfasst, ist es auch möglich, die Menge des ausgasenden Ammoniaks aus den Signalen des Drucksensors 13 und der Öffnungszeit des Entlastungsventils 18 beispielsweise über ein Kennfeld oder eine Tabelle zu ermitteln, die in dem Speicher 22 abgelegt ist.

## Patentansprüche

1. Vorrichtung zum Entsticken von Abgas einer Brennkraftmaschine mit
- einem in einem Abgaskanal (4) angeordneten, nach dem SCR-Prinzip arbeitenden Reduktionskatalysator (5),
- einem Reduktionsmittelvorratsbehälter (9) zur Aufnahme von Reduktionsmittelflüssigkeit,
- einer Reduktionsmittelpumpe (10) zum Fördern von Reduktionsmittel von dem Reduktionsmittelvorratsbehälter (9) zu einer Dosiereinrichtung (11) zum Einbringen des Reduktionsmittels in das dem Reduktionskatalysator (5) zuströmende Abgas,
- einer an den Reduktionsmittelvorratsbehälter (9) angeschlossenen Druckentlastungsleitung (16), über die überschüssiges Reduktionsmittel dem Reduktionskatalysator (5) zugeführt wird,
**dadurch gekennzeichnet, daß** in der Druckentlastungsleitung (16) eine die Menge des überschüssigen Reduktionsmittels erfassende Durchflußmeßeinrichtung (19) angeordnet ist.

2. Vorrichtung nach Anspruch 1, **dadurch gekennzeichnet, daß** in der Druckentlastungsleitung (16) ein Überdruckventil (20) angeordnet ist, das bei einem vorgegebenen Druck im Reduktionsmittelvorratsbehälter (9) den Querschnitt der Entlastungsleitung (16) freigibt.

3. Vorrichtung nach Anspruch 1, **dadurch gekennzeichnet, daß** in der Druckentlastungsleitung (16) ein elektrisch steuerbares Ventil (18) angeordnet ist, das bei einem vorgegebenen Druck im Reduktionsmittelvorratsbehälter (9) den Querschnitt der Entlastungsleitung (16) freigibt.

4. Vorrichtung nach einem der vorhergehenden Ansprüche, **dadurch gekennzeichnet, daß** die Durchflußmeßeinrichtung (19) als Durchflußzähler für Ammoniak ausgebildet ist.

5. Vorrichtung nach einem der vorhergehenden Ansprüche, **dadurch gekennzeichnet, daß** die Entlastungsleitung (16) an einer Stelle innerhalb des Reduktionskatalysators (5) mündet.

6. Verfahren zum Entsticken von Abgas einer Brennkraftmaschine (1), wobei
- abhängig von Betriebsparametern der Brennkraftmaschine (1) und/oder eines nach dem SCR-Prinzip arbeitenden Reduktionskatalysators (5) eine zu dosierende Menge an Reduktionsmittellösung bestimmt und während des Betriebes der Brennkraftmaschine (1) in einen Abgaskanal (4) stromauf des Reduktionskatalysators (5) eingebracht wird und
- in Stillstandszeiten der Brennkraftmaschine (1) aufgrund von Temperatureinflüssen sich bildendes gasförmiges Reduktionsmittel dem Reduktionskatalysator (5) zugeführt wird,
**dadurch gekennzeichnet, daß** die Menge des gasförmigen Reduktionsmittels erfasst wird und bei der Bestimmung der im Betrieb der Brennkraftmaschine (1) zu dosierenden Menge an Reduktionsmittellösung berücksichtigt wird.

7. Verfahren nach Anspruch 6, **dadurch gekennzeichnet, daß** das gasförmige Reduktionsmittel über eine, den Reduktionsmittelvorratsbehälter (9) und den Reduktionskatalysator (5) verbindenden Druckentlastungsleitung (16) an einer Stelle innerhalb des Reduktionskatalysators (5) zugeführt wird.

8. Verfahren nach Anspruch 7, **dadurch gekennzeichnet, daß** das gasförmige Reduktionsmittel dem Reduktionskatalysator (5) zugeführt wird, wenn der Druck im Reduktionsmittelvorratsbehälter (9) einen vorgegebenen Druck überschreitet.

9. Verfahren nach Anspruch 8, **dadurch gekennzeichnet, daß** eine Ventileinrichtung (18,20) in der Druckentlastungsleitung (16) bei Erreichen des vorgegebenen Druckwertes die Druckentlastungsleitung (16) öffnet.

10. Verfahren nach Anspruch 8, **dadurch gekennzeichnet, daß** die Menge des gasförmigen Reduktionsmittels mit Hilfe einer Durchflußmeßeinrichtung (19) ermittelt wird, die in der Druckentlastungsleitung (16) angeordnet ist.

11. Verfahren nach Anspruch 8, **dadurch gekennzeichnet, daß** die Menge des gasförmigen Reduktionsmittels aus dem Wert für den Druck im Reduktionsmittelvorratsbehälter (9) und der Öffnungsdauer der Ventileinrichtung (18,20) ermittelt wird.

12. Verfahren nach Anspruch 10, **dadurch gekennzeichnet, daß** als Reduktionsmittel wässerige Harnstofflösung verwendet wird und die Durchflußmeßeinrichtung (19) als Durchflußzähler für Ammoniak ausgebildet ist.

## Claims

1. A device for the denitrification of exhaust gas from an internal combustion engine, having
- a reducing catalytic converter (5) arranged in an exhaust pipe (4) and operating according to the SCR principle,
- a reducing agent storage vessel (9) for accommodating reducing agent fluid,
- a reducing agent pump (10) for conveying reducing agent from the reducing agent storage vessel (9) to an apportioning device (11) for introducing reducing agent into the exhaust gas flowing to the reducing catalytic converter (5),
- a pressure relief line (16) connected to the reducing agent storage vessel (9), via which excess reducing agent is fed to the reducing catalytic converter (5),
**characterised in that** a flow meter (19) detecting the quantity of excess reducing agent is arranged in the pressure relief line (16).

2. A device according to claim 1, **characterised in that** a pressure relief valve (20) is arranged in the pressure relief line (16), which valve (20) opens the cross section of the relief line (16) when a given pressure is reached in the reducing agent storage vessel (9).

3. A device according to claim 1, **characterised in that** an electrically controllable valve (18) is arranged in the pressure relief line (16), which valve (18) opens the cross section of the relief line (16) when a given pressure is reached in the reducing agent storage vessel (9).

4. A device according to one of the preceding claims,
**characterised in that** the flow meter (19) takes the form of a flow counter for ammonia.

5. A device according to one of the preceding claims,
**characterised in that** the relief line (16) discharges at a point inside the reducing catalytic converter (5).

6. A method for the denitrification of exhaust gas from an internal combustion engine (1),
- a quantity of reducing agent solution to be apportioned being determined as a function of operating parameters of the internal combustion engine (1) and/or of a reducing catalytic converter (5) operating according to the SCR principle and being introduced into an exhaust pipe (4) upstream of the reducing catalytic converter (5) during operation of the internal combustion engine (1) and
- gaseous reducing agent forming during down times of the internal combustion engine (1) due to temperature influences being fed to the reducing catalytic converter (5),
**characterised in that** the quantity of gaseous reducing agent is detected and is taken into account in determining the quantity of reducing agent solution to be apportioned during operation of the internal combustion engine (1).

7. A method according to claim 6, **characterised in that** the gaseous reducing agent is fed via a pressure relief line (16), connecting the reducing agent storage vessel (9) and the reducing catalytic converter (5), to a point inside the reducing catalytic converter (5).

8. A method according to claim 7, **characterised in that** the gaseous reducing agent is fed to the reducing catalytic converter (5) if the pressure in the reducing agent storage vessel (9) exceeds a given pressure.

9. A method according to claim 8, **characterised in that** a valve device (18, 20) in the pressure relief line (16) opens the pressure relief line (16) when the given pressure value is reached.

10. A method according to claim 8, **characterised in that** the quantity of gaseous reducing agent is determined by means of a flow meter (19), which is arranged in the pressure relief line (16).

11. A method according to claim 8, **characterised in that** the quantity of gaseous reducing agent is determined from the value of the pressure in the reducing agent storage vessel (9) and the open period of the valve device (18, 20).

12. A method according to claim 10, **characterised in that** aqueous urea solution is used as reducing agent and the flow meter (19) takes the form of a flow counter for ammonia.

## Revendications

1. Dispositif de dénitration des gaz d'échappement d'un moteur à combustion interne comprenant
- un pot (5) catalytique de réduction placé dans le conduit (4) des gaz d'échappement et fonctionnant suivant le principe SCR,
- un réservoir (9) d'agent de réduction destiné à recevoir de l'agent de réduction liquide,
- une pompe (10) d'agent de réduction destinée à véhiculer de . l'agent de réduction du réservoir (9) d'agent de réduction à un dispositif (11) de dosage pour introduire l'agent de réduction dans les gaz d'échappement affluant au pot (5) catalytique de réduction,
- un conduit (16) de détente de la pression qui est relié au réservoir (9) d'agent de réduction et par lequel l'agent de réduction en excès est envoyé au pot (5) catalytique de réduction,
**caractérisé en ce qu'**il est monté dans le conduit (16) de détente de la pression un dispositif (19) de mesure du débit relevant la quantité de l'agent de réduction en excès.

2. Dispositif suivant la revendication 1, **caractérisé en ce qu'**il est monté dans le conduit (16) de détente de la pression une vanne (20) de surpression qui, pour une pression donnée à l'avance dans le réservoir (9) d'agent de réduction, dégage la section transversale du conduit (16) de détente.

3. Dispositif suivant ia revendication 1, **caractérisé en ce qu'**il est monté dans le conduit (16) de détente de la pression une vanne (18) qui peut être commandée électriquement et qui, pour une pression donnée à l'avance dans le réservoir (9) d'agent de réduction, dégage la section transversale du conduit (16) de détente.

4. Dispositif suivant l'une des revendications précédentes, **caractérisé en ce que** le dispositif (19) de mesure du débit est constitué en compteur de débit pour de l'ammoniac.

5. Dispositif suivant l'une des revendications précédentes, **caractérisé en ce que** le conduit (16) de détente débouche en un point à l'intérieur du pot (5) catalytique de réduction.

6. Procédé de dénitration des gaz d'échappement d'un moteur (1) à combustion interne, dans lequel
- en fonction de paramètres de fonctionnement du moteur (1) à combustion interne et/ou d'un pot (5) catalytique de réduction fonctionnant suivant le principe SCR, on détermine une quantité à envoyer de manière dosée de solution d'agent de réduction, et pendant le fonctionnement du moteur (1) à combustion interne, on l'introduit dans un conduit (4) pour les gaz d'échappement en amont du pot (5) catalytique de réduction et
- pendant les temps d'arrêt du moteur (1) à combustion interne, on envoie au pot (5) catalytique de réduction de l'agent de réduction gazeux se formant en raison des influences de la température,
**caractérisé en ce que** l'on relève la quantité d'agent de réduction gazeux et on en tient compte pour la détermination de la quantité de solution d'agent de réduction à envoyer de manière dosée lors du fonctionnement du moteur (1) à combustion interne.

7. Procédé suivant la revendication 6, **caractérisé en ce que** l'on envoie l'agent de réduction gazeux par un conduit (16) de détente de la pression mettant le réservoir (9) d'agent de réduction en communication avec le pot (5) catalytique de réduction en un point à l'intérieur du pot (5) catalytique de réduction.

8. Procédé suivant la revendication 7, **caractérisé en ce que** l'on envoie l'agent de réduction gazeux au pot (5) catalytique de réduction lorsque la pression dans le réservoir (9) d'agent de réduction dépasse une pression donnée à l'avance.

9. Procédé suivant la revendication 8, **caractérisé en ce qu'**un dispositif (18, 20) à vanne dans le conduit (16) de détente de la pression ouvre le conduit (16) de détente de la pression lorsque la valeur de pression donnée à l'avance est atteinte.

10. Procédé suivant la revendication 8, **caractérisé en ce que** l'on détermine la quantité de l'agent de réduction gazeux à l'aide d'un dispositif (19) de mesure du débit qui est monté dans le conduit (16) de détente de la pression.

11. Procédé suivant la revendication 8, **caractérisé en ce que** l'on détermine la quantité de l'agent de réduction gazeux à partir de la valeur de la pression dans le réservoir (9) d'agent de réduction et de la durée d'ouverture du dispositif (18, 20) à vanne.

12. Procédé suivant la revendication 10, **caractérisé en ce que** l'on utilise comme agent de réduction une solution aqueuse d'urée, et le dispositif (19) de mesure du débit est constitué sous la forme d'un compteur de débit pour de l'ammoniac.
